# EUROPEAN PATENT APPLICATION

(11) **EP 4 428 530 A1**
(43) Date of publication of application: **11.09.2024**
(21) Application number: 23161051.0
(22) Date of filing: 09.03.2023
(51) Int. Cl.: G01N 23/20008

(54) **X-RAY DIFFRACTION APPARATUS AND METHOD FOR ANALYSING PACKAGED SAMPLES**

(71) Applicant: Malvern Panalytical B.V., 7602 EA Almelo (NL)
(72) Inventor: Kogan, Vladimir, 7602 EA Almelo (NL); Beckers, Detlef, 7602 EA Almelo (NL)
(74) Representative: Elkington and Fife LLP

(57) **Abstract**

The present invention relates to a method and an X-ray diffraction apparatus for analysing a sample confined in a packaging (a "packaged sample"). The method comprises arranging a first primary X-ray optic between an X-ray source and the packaged sample to focus X-rays from the X-ray source into a focused X-ray beam of convergent or parallel X-rays and to direct the focused X-ray beam towards the packaged sample and arranging a first secondary X-ray optic between the packaged sample and an X-ray detector. The packaged sample is irradiated, by the X-ray source, with the focused X-ray beam of converging or parallel beam of X-rays, the X-rays having an energy greater than about 9 keV, at an incident angle, ω, to an incident surface of the packaged sample, while the analyte is confined in the packaging. The first secondary X-ray optic is configured such that a first portion of diffracted X-rays pass therethrough to be detected by the X-ray detector and a second portion of diffracted X-rays are prevented from being detected by the X-ray detector, wherein the first portion of diffracted X-rays come from a region within the packaging.

## Description

### FIELD OF THE INVENTION

The present invention is directed to an X-ray diffraction apparatus for analysing packaged samples and a method of analysing a packaged sample by X-ray diffraction analysis. In particular, the present invention is directed to providing convenient and improved analysis of packaged samples, especially packaged samples comprising a small amount of crystalline material such as pharmaceutical samples comprising predominantly amorphous material, or samples with phase mixtures.

### BACKGROUND

In general, X-ray diffraction analysis is used to analyse products by identifying crystalline components present in a sample. X-ray diffraction analysis can be used to test samples in the form of a powder, a lyophilized powder, a tablet, a liquid or a semi-solid formulation. For example, in the field of pharmaceuticals, X-ray diffraction analysis may be used to test the amorphous state of a product, such as a vaccine. The presence of even a small amount of a crystalline component can compromise the stability of the vaccine, so it is desirable to be able to detect the presence of crystallinity within an otherwise amorphous matrix.

Ideally, during X-ray diffraction analysis, samples are analysed without any sort of packaging interrupting the incident and/or diffracted X-rays. If a packaging is present, it may absorb and attenuate some of the X-rays incident on/scattered by the sample and/or it may act as a source of background scattering. This may make it difficult to use the data obtained by the X-ray diffraction analysis to identify components in the sample, especially if the sample contains only a small amount of crystalline material or crystalline minority phases in low concentrations. In some cases, the problems associated with the presence of the packaging - in particular difficulty in discriminating between signal from the crystalline material and signal from the packaging - may entirely prevent the identification of a crystalline component present in the sample. Glass, metal and plastic packaging typically have significant absorption/attenuation of X-rays and are also significant sources of background scattering. Packaged samples may be larger than samples prepared specifically for X-ray diffraction analysis. It can also be difficult to interpret data obtained from large packaged samples, since the diffraction signal can be subject to smearing of the diffraction signal (e.g. peak broadening or deformation).

Removing the sample from its packaging is inconvenient, increases the time required for sample preparation and is not cost-efficient. In some cases, removal of the sample from its packaging may be dangerous and require expensive handling (e.g. if the sample comprises toxic and/or radioactive material, or if the contents of the packaging are unknown), which may further increase time, inconvenience and cost associated with carrying out X-ray diffraction analysis of the sample. Additionally, removing a sample from its packaging might change or damage the sample (e.g. analysis of lyophilized powder, or analysis of a battery), or might complicate the measurement process in other ways (e.g. exposure of the sample to the atmosphere may be unacceptable for lyophilized powders, for amorphous samples at risk of recrystallization, or for samples where exposure to the atmosphere could result in polymorphic phase transformations).

It would therefore be desirable to provide an X-ray diffraction apparatus that can facilitate collection of X-ray diffraction analysis data that is relatively easy to interpret. In particular, it would be desirable to provide an X-ray diffraction apparatus that can facilitate safe, effective and convenient analysis of a packaged sample, with high specificity. It would also be desirable to provide a safe, effective and convenient method of analysing a packaged sample, with high specificity.

### SUMMARY

According to an aspect of the invention, there is provided a method of X-ray diffraction analysis for analysing a packaged sample, wherein the packaged sample comprises an analyte confined in a packaging, the method comprising:
arranging a first primary X-ray optic between an X-ray source and the packaged sample to focus X-rays from the X-ray source into a focused X-ray beam of convergent or parallel X-rays and to direct the focused X-ray beam towards the packaged sample;
arranging a first secondary X-ray optic between the packaged sample and an X-ray detector;
using the X-ray source to irradiate the packaged sample with the focused X-ray beam of converging or parallel X-rays, the X-rays having an energy greater than about 9 keV, at an incident angle, ω, to an incident surface of the packaged sample, while the analyte is confined in the packaging;
configuring the first secondary X-ray optic such that a first portion of diffracted X-rays pass therethrough to be detected by the X-ray detector and a second portion of diffracted X-rays are prevented from being detected by the X-ray detector, wherein the first portion of diffracted X-rays come from a region substantially within the packaging.

Generally speaking, X-ray diffraction analysis is conducted on a sample (analyte) that has been specifically prepared for the purpose of conducting said analysis and minimising any external effects (e.g. minimising any contribution of the sample holder/receptacle to background scattering, or absorption or attenuation of X-rays, and controlling volume/format of the sample to minimise/negate diffraction signal smearing). In this regard, and in the context of this specification, 'packaged sample' (and variants thereof) refers to an analyte confined in a packaging (i.e. it is not a sample that has been specifically prepared for the purpose of conducting analysis: the packaging may invariably contribute to background scattering, and/or absorption or attenuation of X-rays; and the volume/format of the analyte may cause diffraction signal smearing).

As used herein, 'analyte' refers to the substance being analysed (also referred to herein as 'sample'), and the analyte being 'confined in packaging' refers to the fact that the contents of the packaging (i.e. the analyte/sample) may not be able to be directly accessed and/or processed for analysis. This may be for any one of a number of reasons, for example: the analyte/sample may be harmful/toxic; accessing the analyte/sample may negate any tamper-proof features of the packaging; the analyte/sample may no longer be able to be sold if accessed; the analyte/sample may be altered if exposed to ambient atmosphere/conditions. In some instances 'confined' may refer to the analyte being (generally) inaccessibly sealed in the packaging (e.g. a battery), or may refer to the analyte being accessibly sealed in the packaging (e.g. a pharmaceutical product). As used herein, 'packaging' may refer to any material utilised to contain the analyte, including, but not limited to, glass, metal, plastic or any combination thereof. As opposed to samples specifically prepared for the purpose of conducting analysis (e.g. glass capillaries with very thin (<0.5mm) walls), the packaging may be opaque to the eye, and/or may only be semi-transparent to X-rays.

As will be appreciated by those skilled in the art, the region of the packaged sample being analysed is defined by the region formed by the intersection of the incident X-ray beam and the diffracted X-ray beam as detected by the X-ray detector (i.e. the first portion of diffracted X-rays). This region may be altered/moved by modifying one or more of the first primary X-ray optic, the sample holder (and thus the position of the packaged sample), or the first secondary X-ray optic. Doing so alters/moves the position (location and/or volume) of the region formed by the intersection of the incident X-ray beam and the first portion of diffracted X-rays that are detected by the X-ray detector (i.e. the region of the packaged sample that is being analysed). In this way, the region being analysed can be altered/moved to accommodate the type/format of the packaged sample. In other words, changing the proportion of diffracted X-rays that are detected (or detectable) by the X-ray detector restricts acceptance at the X-ray detector, thereby altering/moving the region from which the first portion of diffracted X-rays are detected. Furthermore, by ensuring that the first portion of diffracted X-rays come from a region substantially within the packaging, effects of the packaging on the detected X-ray signal can be reduced.

Of the X-rays diffracted by the packaged sample, only the first portion of diffracted X-rays passes through the first secondary X-ray optic and reaches and is detected by the X-ray detector. The first portion of diffracted X-rays come from a region substantially within the packaging - that is, all or the majority (e.g., equal to or greater than 50%, 60%, 70%, 80%, 90% or 95%) of X-rays of the first portion of diffracted X-rays come from a region of the packaged sample within the packaging. "A region of the packaged sample within the packaging" refers to a region, inside the packaging, that substantially excludes the packaging. The beam of X-rays is substantially monochromatic. That is, the X-rays have an energy within an energy range of ± 0.5 keV. For example, the beam of X-rays may have an energy of between 16.9 keV and 17.9 keV (for Molybdenum, which has a characteristic energy of 17.44 keV). It will be appreciated that other X-ray sources will have different energy ranges to be considered monochromatic. For example, the beam of X-rays from a Gallium source (which has a characteristic energy of 9.2 keV) may have an energy within an energy range of 8.7 keV and 9.7 keV.

The first secondary X-ray optic may be configured such that the first portion of diffracted X-rays come from a region within the analyte.

In some embodiments, all or the majority (e.g., equal to or greater than 50%, 60%, 70%, 80%, 90% or 95%) of diffracted X-rays that pass through the first secondary X-ray optic to reach the X-ray detector are diffracted X-rays from a region within the analyte. Of the diffracted X-rays that pass through the first secondary X-ray optic to reach the X-ray detector, some (e.g., equal to or less than 49%) of the diffracted X-rays may come from a region inside the packaging that does not comprise analyte and/or a region including packaging.

The second portion of X-rays may comprise X-rays diffracted by the packaging. Accordingly, the first secondary X-ray optic may be configured to prevent at least some X-rays diffracted by the packaging from reaching and being detected by the X-ray detector.

The method may further comprise arranging a second primary X-ray optic between the first primary X-ray optic and the packaged sample, wherein the second primary X-ray optic and the first secondary X-ray optic are configured to form an analysis intersection, formed by the intersection of the incident X-ray beam and the diffracted X-ray beam, wherein the analysis intersection is positioned in a region within the packaging. Accordingly, the diffracted X-rays that pass through the first secondary optic to be detected by the X-ray detector may be from a region inside the packaging (i.e., a region of the packaged sample excluding the packaging).

The first secondary X-ray optic may be a collimator. The collimator may have an aperture that is slit-shaped and may have an aspect ratio greater than 5. The ratio of the distance from the packaged sample to the collimator to the distance from the collimator to the X-ray detector may be equal to or less than 0.1, and is preferably less than 0.025.

In embodiments comprising a second primary X-ray optic, preferably both the first secondary X-ray optic and the second primary X-ray optic are collimators having slit-shaped apertures.

The method may further comprise controlling an active area of the X-ray detector based on the size of an aperture of the collimator and the position of the collimator relative to the packaged sample and the X-ray detector.

The packaging may comprise a cavity in which the analyte is held, and a portion of the cavity may be free of the analyte. The method may further comprise adjusting the position of the packaged sample and/or the first secondary X-ray optic so that an analysis intersection, formed by the intersection of the incident X-ray beam and the diffracted X-ray beam, is positioned in a portion of the cavity in which the analyte is held and not in the portion of the cavity that is free of the analyte.

The packaging may comprise glass, metal and/or plastic. The analyte may comprise amorphous organic material.

The X-ray source may comprise an anode. The anode may comprise a material having an atomic number of equal to or greater than 31 and the packaging may comprise a wall having a thickness of at least approximately 1 mm.

According to another aspect of the invention, there is provided an X-ray diffraction apparatus for analysing a sample, the X-ray diffraction apparatus comprising:
a packaged sample comprising an analyte confined in a packaging;
an X-ray source for irradiating the packaged sample with incident X-rays, wherein the incident X-rays are directed towards the packaged sample along an incident beam path;
a sample support for supporting the packaged sample;
a first primary X-ray optic arranged in the incident beam path, wherein the first primary X-ray optic is arranged to focus the incident X-rays into a convergent or parallel X-ray beam, and to direct the X-ray beam towards the packaged sample;
an X-ray detector arranged to receive diffracted X-rays from the packaged sample; and
a first secondary X-ray optic arranged between the sample support and the X-ray detector to allow a first portion of diffracted X-rays to reach the X-ray detector and to prevent a second portion of diffracted X-rays from being detected by the X-ray detector, wherein the first secondary X-ray optic is configured such that the first portion of diffracted X-rays come from a region substantially within the packaging.

The first secondary X-ray optic may be arranged to prevent at least some of the diffracted X-rays from reaching an active portion of the X-ray detector.

With this arrangement, the region of the packaged sample that is analysed is defined by the region formed by the intersection of the incident X-ray beam and the diffracted X-ray beam as detected by the X-ray detector (i.e. the first portion of diffracted X-rays). This region may be altered/moved by modifying one or more of the first primary X-ray optic, the sample holder (and thus the position of the packaged sample), or the first secondary X-ray optic. It is therefore possible to adjust the region that the first portion of diffracted X-rays come from by moving the position of the packaged sample.

In some embodiments, the X-ray diffraction apparatus may be arranged to conduct X-ray analysis in transmission geometry. In such embodiments, the X-ray source is arranged to direct X-rays towards an incident surface of the packaged sample and the X-ray detector is arranged to receive X-rays that exit the packaged sample through another surface of the packaged sample.

In some other embodiments, the X-ray diffraction apparatus may be arranged to conduct X-ray analysis in reflection geometry. In such embodiments, the X-ray source is arranged to direct X-rays towards an incident surface of the packaged sample and the X-ray detector is arranged to receive X-rays reflected by the crystal lattice.

The first secondary X-ray optic may be configured such that the first portion of diffracted X-rays come from a region within the analyte.

By reducing the region from which the first portion of diffracted X-rays come, to being from substantially within the analyte, not only are effects of the packaging on the detected X-ray signal reduced (or substantially minimised), but effects from e.g. any space within the packaging that does not contain analyte (e.g. air, or other material or substance, located within the packaging that is not considered analyte) are also reduced. Similarly, by enabling a reduced region of the analyte to be analysed, this apparatus can also be useful for the analysis for inhomogeneous analytes. For example, different parts of the analyte may be analysed by configuring the first secondary X-ray optic to allow diffracted X-rays corresponding to those parts to reach the X-ray detector (e.g., different parts of a battery - such as the cathode, anode, electrode - can be analysed).

The X-ray diffraction analysis apparatus can be adjusted to change the region from which the first portion of diffracted X-rays originate - for example, by modifying one or more of the first primary X-ray optic, the sample holder (and thus the position of the packaged sample), or the first secondary X-ray optic.

The second portion of X-rays may comprise X-rays diffracted by the packaging.

The X-ray diffraction apparatus may further comprise a second primary X-ray optic arranged between the first primary X-ray optic and the packaged sample, wherein the second primary X-ray optic and the first secondary X-ray optic are configured to form an analysis intersection, formed by the intersection of the incident X-ray beam and the diffracted X-ray beam, wherein the analysis intersection is positioned in a region within the packaging. "A region of the packaged sample within the packaging" refers to a region, inside the packaging, that substantially excludes the packaging.

The first secondary X-ray optic of the X-ray diffraction analysis apparatus may be a collimator. The collimator may comprise a slit-shaped aperture having an aspect ratio greater than 5. The collimator may be positioned closer to the packaged sample than it is to the X-ray detector. Positioning the collimator closer to the packaged sample than to the X-ray detector minimises the region of the packaged sample being analysed (i.e. by altering the acceptance angle, thereby restricting the proportion of diffracted X-rays that reach the X-ray detector). Reducing aperture size of the collimator can additionally, or alternatively, further restrict the proportion of diffracted X-rays that reach the X-ray detector. When either, or both, of these modifications to the overall area/volume of the region of the packaged sample being analysed are combined with moving/modifying the incident X-ray beam (e.g. by modifying the first primary X-ray optic), this can result in the positioning of the region of the packaged sample being analysed being moved (e.g. further within the packaging, to capture more of the analyte).

By positioning the collimator closer to the packaged sample than to the X-ray detector it is possible to use a slit collimator in combination with a one-dimensional or two-dimensional X-ray detector. A ratio of a distance between the sample and the collimator to a distance between the collimator and the X-ray detector may therefore be equal to or less than 0.1 or less than 0.025. The distance between the packaged sample and the collimator may be the distance along a straight line extending from the second surface of the packaged sample to the sample-facing surface of the collimator, wherein the straight line is perpendicular to the sample-facing surface of the collimator.

In other embodiments, the first secondary X-ray optic may be any optic that limits the acceptance of X-rays coming from the sample, for example, X-ray mirrors, monochromators, etc., that can be configured such that the first portion of diffracted X-rays (i.e. the portion of the diffracted X-rays that are detected by the X-ray detector) come from a region substantially within the packaging.

The X-ray diffraction apparatus may comprise a goniometer, wherein the X-ray detector is arranged to rotate about an axis of the goniometer. The axis of the goniometer lies in an axial plane of the X-ray diffraction apparatus. The first secondary X-ray optic (for example, a one-dimensional slit collimator) may limit the divergence of an X-ray beam in an equatorial plane of the X-ray diffraction apparatus. The equatorial plane is a plane perpendicular to an axial plane of the X-ray diffraction apparatus.

The X-ray source may comprise an anode. The anode may comprise a material having an atomic number of equal to or greater than 31 and/or the primary X-ray optic may be a monochromator arranged to direct a substantially monochromatic beam of X-rays towards the packaged sample.

The X-ray source may be configured to selectively irradiate the packaged sample with characteristic X-rays having an energy greater than or equal to about 9 keV. For example, the X-ray source may comprise a filter configured to attenuate X-rays having an energy less than 9 keV.

The X-ray detector may have an active portion for generating a detection signal in response to an X-ray incident on the active portion, the active portion comprising a plurality of detection elements for detecting X-rays, and the X-ray diffraction apparatus may further comprise a controller configured to select which of the detection elements contribute to generating the detection signal.

In this way, it is possible to control which part of the X-ray detector is used to detect X-rays, which can help users to ensure that X-rays diffracted from the packaging do not substantially contribute to the detection signal.

The X-ray source may be arranged to irradiate an incident surface of the packaged sample at an incident angle, ω, and the X-ray detector is arranged to receive diffracted X-rays at a diffraction angle 2θ.

The X-ray diffraction apparatus may further comprise a second secondary X-ray optic for altering the divergence of the diffracted X-rays, wherein the second secondary X-ray optic is arranged between the first secondary X-ray optic and the X-ray detector.

### BRIEF DESCRIPTION OF THE DRAWINGS

Embodiments of the present invention will now be described, by way of example, with reference to the accompanying drawings, in which:
Figure 1A is a schematic diagram illustrating an example of a packaged sample;
Figure 1B is a schematic diagram illustrating another example of a packaged sample;
Figure 2 is a schematic diagram illustrating an X-ray diffraction apparatus for analysing a packaged sample, according to an embodiment of the invention;
Figure 3 is a schematic diagram illustrating an X-ray diffraction apparatus for analysing a packaged sample, according to another embodiment of the invention;
Figure 4 is a schematic diagram illustrating an X-ray diffraction apparatus for analysing a packaged sample, according to another embodiment of the invention;
Figure 5 illustrates a method of X-ray analysis according to one or more embodiments of the invention; and
Figure 6 illustrates a method of X-ray analysis according to one or more embodiments of the invention.

It should be noted that these figures are diagrammatic and not drawn to scale. Relative dimensions and proportions of parts of these figures have been shown exaggerated or reduced in size, for the sake of clarity and convenience in the drawings.

### DETAILED DESCRIPTION

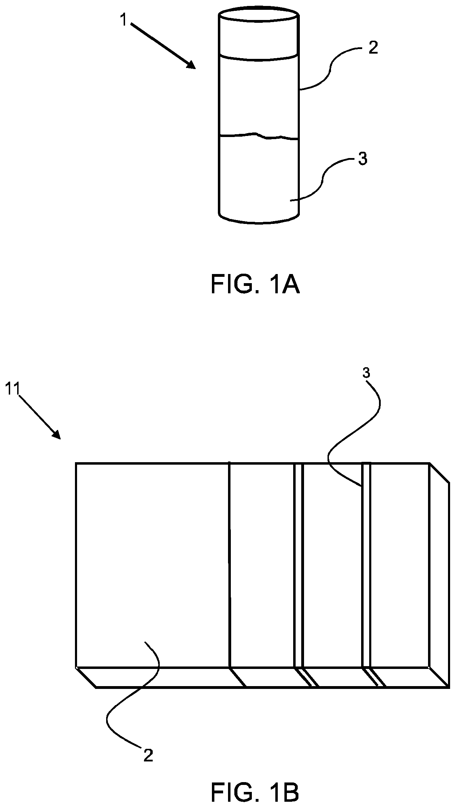

Figures 1A and 1B show examples of a packaged sample 1, 11 respectively. In each example, the packaged sample 1, 11 comprises a packaging 2 and an analyte 3 held within the packaging 2.

In Figure 1A the packaged sample 1 comprises packaging, in the form of a glass vial 2, holding an analyte 3, such as a pharmaceutical product. The glass vial comprises a container and a lid, and the container is partially filled with the pharmaceutical product. In this example, the pharmaceutical product predominantly comprises an amorphous matrix of organic material. X-ray diffraction analysis may be conducted on the pharmaceutical product to determine whether there is a crystalline component present in the analyte. Glass vials for holding pharmaceutical samples typically have a diameter of at least 5 mm and a wall thickness of at least 1 mm. The glass vial is semi-transparent to X-rays and is a significant potential source of X-ray scattering.

In Figure 1B, the packaged sample 11 is a battery cell. The left-hand side of the battery shows the packaging 2 (i.e. the battery casing), whilst on the right-hand side the packaging is omitted to depict the internal structure. X-ray diffraction analysis may be used to monitor battery degradation, by analysing the underlying crystal structure of the internal structure of the cell e.g. analysing the electrodes and/or electrolyte during charge cycling.

In general, for packaged samples (including both of these types of packaged sample), it may be useful to be able to assess the analyte without removing it from the packaging. For the battery, the analyte cannot be removed from the packaging without damaging the battery. Further, removing the analyte might release toxic material into the environment. In the case of the pharmaceutical product, removing the analyte from the glass vial might release toxic material into the environment, compromise the integrity of the pharmaceutical product, or have some other effect on the sample (e.g., mechanical influence on the sample may initiate recrystallisation of amorphous material, polymorphic phase transformations and/or introduction of defects - further it may generally be desirable to avoid contact with the external atmosphere) that may prevent the product from being sold. Whilst two specific examples of packaged samples are discussed with reference to Figures 1A and 1B, it will be appreciated by those of ordinary skill in the art that the analysis of other sample types (such as polycrystalline samples) may also or alternatively be analysed, other types of analysis (such as polymorphism analysis) may be conducted, and that different packaging types, depending on the sample being analysed, may obscure direct access to the sample.

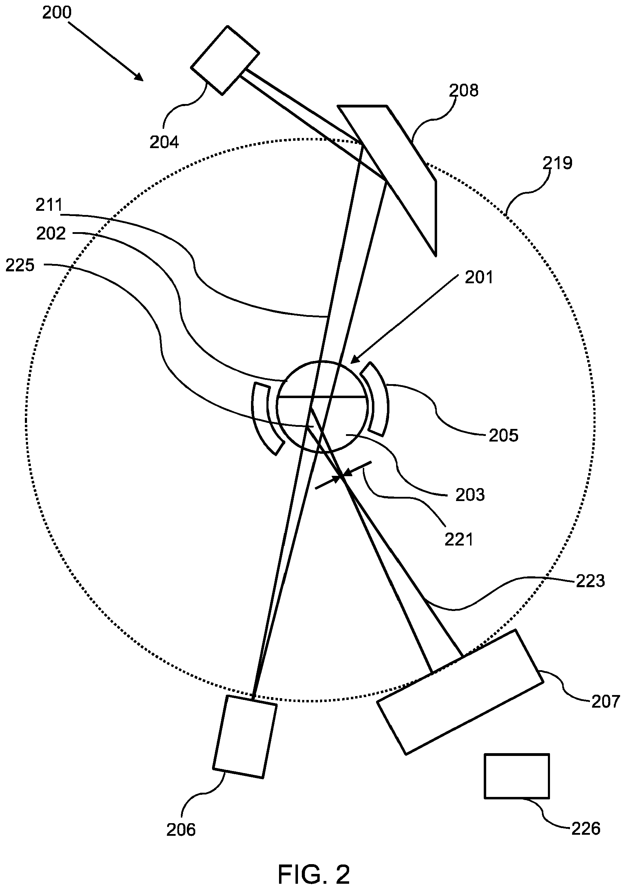

Figure 2 shows an X-ray diffraction apparatus 200 for analysing a packaged sample 201, such as one of the packaged samples shown in Figure 1. In Figure 2, the packaged sample 201 comprises a packaging 202 and an analyte 203. For example, the packaging 202 is a glass vial, which is partially filled with the analyte 203, as shown in Figure 1A.

Referring to Figure 2, the X-ray diffraction apparatus 200 is arranged to carry out angular dispersive X-ray diffraction analysis in transmission geometry. The X-ray diffraction apparatus 200 comprises an X-ray source 204, a sample support 205, a beam stop 206, an X-ray detector 207 and a goniometer 219. The X-ray detector 207 comprises an array of detection elements - i.e., it is a one-dimensional (1D) or two-dimensional (2D) X-ray detector. In Figure 2, the goniometer circle is illustrated, with the packaged sample 201 positioned in the centre of the goniometer circle. An axis of the goniometer, about which the X-ray detector 207 rotates, extends into the plane of the page. The sample support 205 holds the packaged sample 201 between the X-ray source 204 and the X-ray detector 207, in the centre of the goniometer circle. For example, the sample support may be a clamp for holding the packaged sample 201. Whilst Figure 2 depicts the X-ray diffraction apparatus 200 as being arranged to carry out angular dispersive X-ray diffraction analysis in transmission geometry, it should be appreciated that in an alternative arrangement the X-ray diffraction apparatus may be arranged to carry out angular dispersive X-ray diffraction analysis in reflection geometry.

The X-ray source 204 is an X-ray tube configured to generate X-rays. A first primary X-ray optic 208 is arranged between the X-ray source 204 and the sample support 205 to form a convergent incident X-ray beam 211. In Figure 2, the first primary X-ray optic 208 is shown as comprising an elliptical graded X-ray mirror, which is configured to receive X-rays from the X-ray source 204 and to reflect a substantially monochromatic, convergent beam of X-rays towards the packaged sample 201. It will be appreciated that other first primary X-ray optics may alternatively be implemented. Likewise, while Figure 2 shows the first primary X-ray optic forming a convergent incident X-ray beam, it will be appreciated that the first primary X-ray optic may instead be configured to form a substantially parallel X-ray beam.

The incident X-ray beam 211 irradiates the packaged sample 201 at an angle ω to an incident surface of the packaged sample 201. The incident X-rays pass through the packaged sample 201, and exit the packaged sample 201 through another surface of the packaged sample 201. Some of the incident X-rays pass through the packaged sample 201, without deviation, towards the beam stop 206. Some of the incident X-rays are diffracted by a crystalline component of the analyte 203, at an angle 2θ, and some may be scattered by the packaging 202 (thereby contributing to "background scattering"). Some X-rays may be scattered by the unoccupied portion of the packaging, where the analyte 203 is not present (these X-rays are not illustrated in Figure 2).

The X-ray detector 207 is arranged to receive X-rays diffracted by the analyte 203 at the angle 2θ. To detect whether a crystalline component is present in the analyte 203, the X-ray detector 207 is rotated, about an axis of the goniometer, to different 2θ angles and the intensity of X-rays at each of the different 2θ positions is recorded.

In embodiments of the invention, and as shown in Figure 2, a first secondary X-ray optic 221 is arranged between the packaged sample 201 and the X-ray detector 207 (note that the term "primary X-ray optic" refers to optics between the X-ray source and sample, on the incident beam side, whereas a first secondary X-ray optic is arranged between the sample and the X-ray detector, on the diffracted beam side). In Figure 2, the first secondary X-ray optic 221 is a one-dimensional slit collimator arranged to limit beam divergence in an equatorial plane of the X-ray diffraction apparatus 200. The collimator 221 comprises a slit-shaped aperture having an aspect ratio of at least 5. The collimator 221 is arranged very close to the packaged sample 201, on the diffracted beam side of the X-ray diffraction apparatus. The collimator 221 is positioned to receive X-rays diffracted by the analyte 203 at an angle 2θ, and to allow only some of the X-rays diffracted by the analyte at the angle 2θ to pass through towards the X-ray detector 207. In Figure 2, only the diffracted X-rays that are able to pass through the slit of the collimator 221 (and which form the diffracted X-ray beam 223) are illustrated. In this way, only diffracted X-rays originating from a portion 225 of the analyte 203 subtended by the incident beam and the diffracted beam are received by the X-ray detector 207, while X-rays originating from other parts of the packaged sample, directed towards the X-ray detector, are blocked by the collimator 221 before they reach the X-ray detector 207.

To prevent some of the X-rays diffracted by the analyte 203 at the angle 2θ from reaching the X-ray detector 207, the collimator 221 is positioned very close the packaged sample 201. By limiting the portion of the analyte "seen" by the X-ray detector 207, it is possible to significantly limit scattering from sources other than the analyte (such as at an inner wall of the packaging, which may give rise to background scattering). The collimator 221 is positioned closer to the sample support 205 (and the packaged sample 201) than it is to the X-ray detector 207. In some embodiments, the ratio of the distance between the sample support 205 and the collimator 221 to the distance between the collimator 221 and the X-ray detector 207 is equal to or less than 0.1, and preferably equal to or less than 0.025.

In some X-ray diffraction apparatuses, a beam conditioner may be positioned close the X-ray detector, to reduce the amount of background scattering (e.g. from the measurement environment, X-ray diffraction apparatus etc.) received by the X-ray detector 207. Note that, in these arrangements, the beam conditioner is sized and positioned to allow the full diffracted X-ray beam to reach the X-ray detector (in the absence of the collimator 221). In other words, the beam conditioner is positioned very close to the X-ray detector, to maximise the proportion of detected X-rays that correspond to X-rays diffracted by the analyte, by reducing the background scatter in the apparatus.

By contrast, the collimator 221 is arranged to block X-rays diffracted at 2θ that would otherwise be detected by the X-ray detector 207 from reaching the X-ray detector 207. In this way, a portion of the analyte is analysed, whilst reducing/avoiding contributions to the detected signal from of X-rays scattered from the sample packaging 202.

In some embodiments, the X-ray source 204 generates X-rays using an anode comprising material having an atomic number equal to or greater than 31 (gallium) e.g. silver (atomic number 47). The inventors have found that combining an X-ray source 204 having such an anode with a collimator 221 arranged close to the packaged sample 201, in an X-ray diffraction apparatus arranged in transmission geometry, can help to ensure that the X-ray detector 207 receives a suitably high intensity of diffracted X-rays from the portion 225 of the analyte 203, whilst minimising any contribution from the packaging 202. Further, the inventors have found that this particular arrangement facilitates effective detection and identification of crystalline components present in the packaged sample, especially in instances where there is only a small amount of crystalline material in a predominantly amorphous sample.

In some embodiments, the collimator 221 may be less than 15 mm away from the axis of the goniometer (i.e. from the centre of the sample). The width of the slit may be equal to or less than 5 mm. For example, the slit may be 5 mm away from the centre of the goniometer circle and the width of the slit may be about 1 mm.

The X-ray diffraction apparatus 200 further comprises a controller 226 configured to control the X-ray detector 207. The controller 226 may be configured to control an active area of the X-ray detector 207 based on the position and slit width of the collimator 221. The active area of the X-ray detector 207 comprises a plurality of detection elements e.g. pixels. In some embodiments, the controller 226 is configured to control which detection elements of the active area of the X-ray detector 207 are able to generate a signal based on the position and slit width of the collimator 221. That is, the controller 226 is configured to control which detection elements of the active area of the X-ray detector are configured to generate a signal, based on information relating to the position and slit width of the collimator 221. Accordingly, the controller 226 can select an active area of the X-ray detector 207 corresponding to the diffracted X-rays originating from the portion 225 of the analyte 203 that pass through the collimator 221. This may help to further reduce the amount of background scattering present in the diffractogram. Additionally, by controlling the active area of the X-ray detector to determine which detection elements are configured to generate a signal in response to incident X-rays, it is possible to further control the portion of the sample "seen" by the X-ray detector.

The portion 225 of the analyte 203 subtended by the incident beam and the diffracted beam can be moved/modified by changing the configuration of the X-ray diffraction apparatus - for example, by changing the position of the sample (using the sample stage) and/or changing the configuration of the first primary X-ray optic and/or the first secondary X-ray optic.

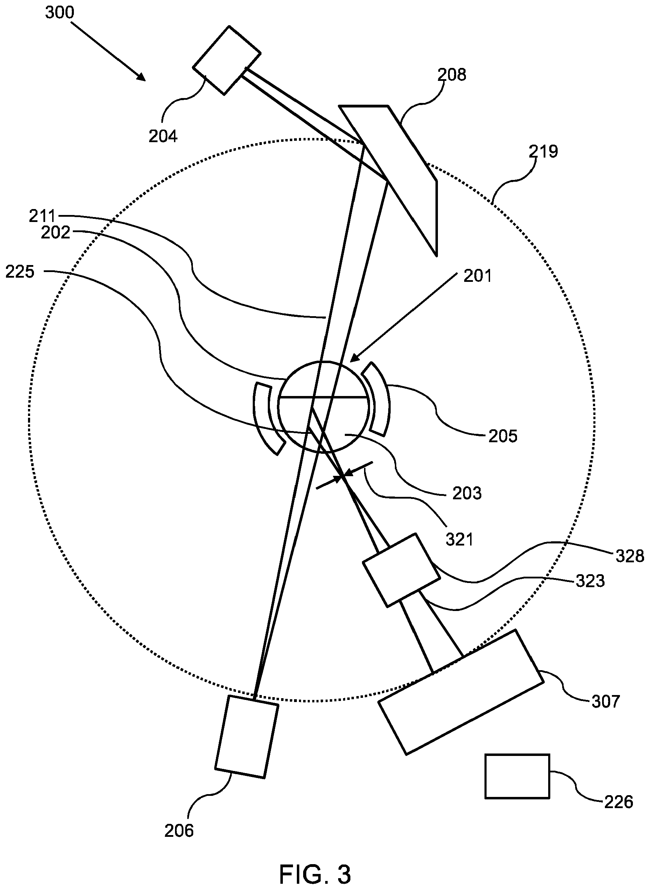

Figure 3 illustrates another embodiment of an X-ray diffraction apparatus 300. In this embodiment, in addition to the components shown in Figure 2, the X-ray diffraction apparatus includes a second secondary X-ray optic 328, which is arranged in the diffracted X-ray beam 323 between the collimator 321 and the X-ray detector 307. The second secondary X-ray optic 328 may be a beam conditioner for blocking at least some X-rays in the equatorial plane. For example, the second secondary X-ray optic 328 may be an equatorial divergence slit, or a parallel plate collimator.

The X-ray diffraction apparatuses illustrated in Figure 2 and Figure 3 may additionally include a Soller slit collimator and/or an aperture for limiting axial divergence of the incident X-ray beam arranged between the first primary X-ray optic and the sample support. Additionally, or alternatively, the X-ray diffraction apparatuses illustrated in Figure 2 and Figure 3 may comprise a Soller slit collimator and/or an aperture for limiting axial divergence of the diffracted X-ray beam arranged between the sample support and the X-ray detector. Axial divergence is divergence from the axis about which the X-ray detector is rotated (the axis extending into the plane of the page in Figures 2 and 3).

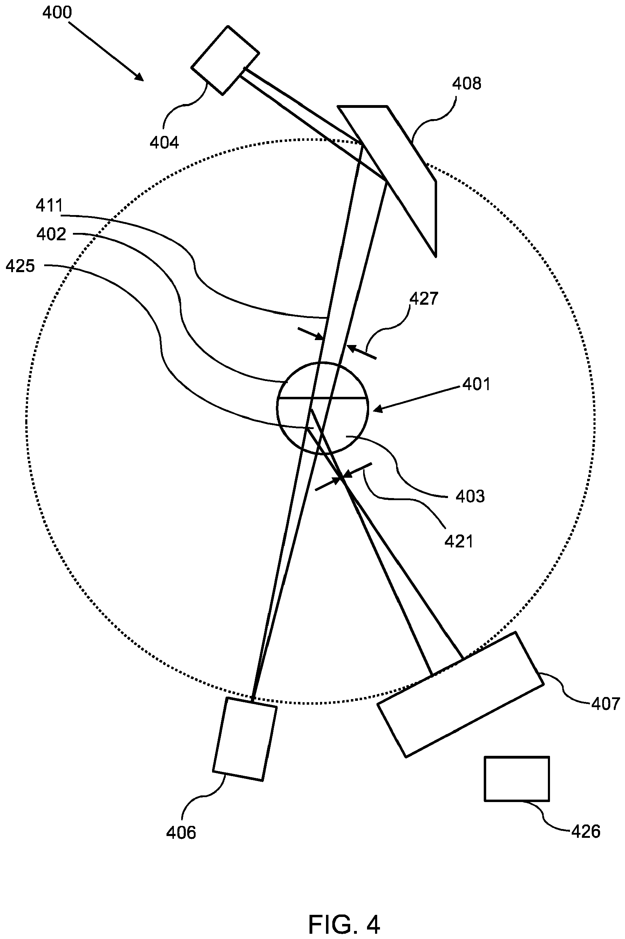

Figure 4 illustrates another embodiment of an X-ray diffraction apparatus 400 according to an embodiment of the invention. The X-ray diffraction apparatus comprises an X-ray source 404 and a first primary X-ray optic 408 arranged to irradiate a packaged sample 401 with an incident beam of convergent X-rays. A beam stop 406 is arranged to absorb at least some X-rays transmitted directly through the packaged sample 401. The packaged sample comprises a packaging 402 and an analyte 403. A second primary X-ray optic 427 is arranged between the first primary X-ray optic 408 and the packaged sample 401. The second primary X-ray optic 427 and the first secondary X-ray optic 421 are configured to define an analysis intersection 425, formed by the intersection of the incident X-ray beam and the diffracted X-ray beam, wherein the analysis intersection is positioned in a region of the packaged sample within the packaging.

In some embodiments, both the second primary X-ray optic 427 and the first secondary X-ray optic 421 are collimators (e.g., collimation slits). The aperture dimensions and the positions of the collimators are chosen in order to select a particular region of the packaged sample 401 for analysis. In Figure 4, the collimators are configured such that a region of the packaged sample comprising substantially only the analyte 403 is selected for analysis (i.e., the analysis intersection only substantially comprises analyte). The configurations of the second primary X-ray optic 427 and the first secondary X-ray optic 421 can be adjusted to change the position of the analysis intersection 425. For example, in some embodiments the analysis intersection may define a volume, wherein the majority of the volume is occupied by the analyte and a minor portion of the volume is occupied by packaging/other material (e.g. air).

An X-ray detector 407 is arranged to receive diffracted X-rays from the packaged sample 401. The X-ray detector 407 is a position sensitive detector. That is, the X-ray detector comprises multiple detection elements (e.g., in a 1D or 2D array). In general, the active area of the X-ray detector is defined by the detection elements configured to generate a signal in response to an incident X-ray. A controller 426 is configured to control the X-ray detector 407. The controller 426 may be configured to control an active area of the X-ray detector 207 based on the position and slit width of the collimators 421, 427. In this way, the controller 426 can select an active area of the X-ray detector 407 corresponding to the diffracted X-rays originating from the analysis intersection. This may help to further reduce the amount of background scattering present in the diffractogram.

While Figure 4 shows an arrangement in which the X-ray source 404 and a first primary X-ray optic 408 are arranged to irradiate the packaged sample 401 with an incident beam of convergent X-rays, it will be appreciated that the incident beam may instead be a parallel beam of X-rays.

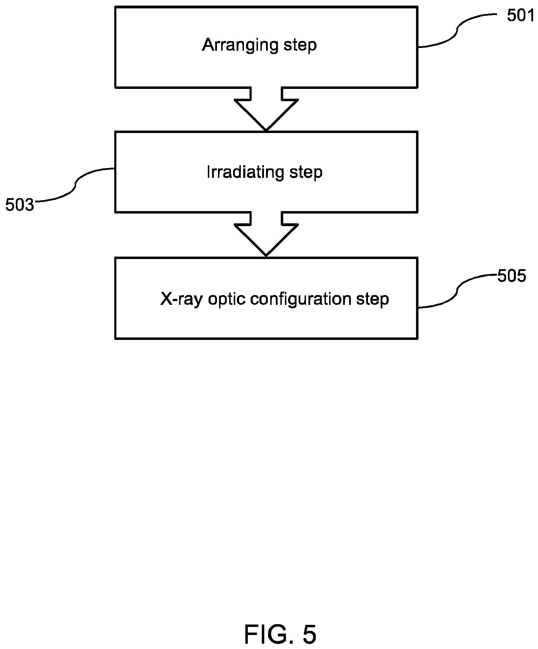

Referring to Figure 5, according to an embodiment of the invention there is provided a method of analysing a packaged sample by X-ray diffraction analysis. The method may be carried out using an X-ray diffraction apparatus as described in connection with any of Figures 2, 3 and 4, or it may be carried out using a different X-ray diffraction apparatus. In an embodiment, the method comprises, in an arranging step 501, arranging a first secondary X-ray optic between the packaged sample and an X-ray detector.

In an irradiating step 503, the packaged sample is irradiated with a converging or parallel beam of incident X-rays. The X-ray source irradiates the packaged sample with an incident beam of X-rays having an energy of at least about 9 keV. In some embodiments, the X-ray source, packaged sample and the X-ray detector are arranged to carry out X-ray diffraction analysis of the packaged sample in transmission geometry. That is, the diffracted X-rays exit the sample from part of the packaged sample opposed to the irradiated surface of the sample along the direction of the incident X-ray beam.

In an X-ray optic configuration step 505, the X-ray optic is configured to block a plurality of X-rays diffracted by the analyte from reaching the X-ray detector. By blocking X-rays from the packaged sample that would otherwise have been detected by the X-ray detector, the X-ray optic limits the part of the sample viewed by the X-ray detector. The inventors have realised that it is possible to obtain good X-ray diffraction analysis results, even for packaged samples, by positioning the collimator close to the packaged sample and irradiating the sample using an X-ray source configured to emit X-rays at an energy of at least 17 keV. In particular, by carrying out X-ray diffraction analysis in this way, the obtained X-ray analysis results have a reduced contribution from background scattering sources, which would otherwise make it difficult to discriminate between a low-intensity diffraction peak and scattering from the packaging/other background scattering sources.

It should be appreciated that whilst X-ray optic configuration step 505 is shown as occurring subsequently to the irradiating step 503, the X-ray optic configuration step 505 may occur before the irradiating step 503 or the steps may occur (or be initiated) substantially simultaneously.

In some embodiments, the X-ray optic is a collimator (e.g., a collimation slit) and the distance from the packaged sample to the collimator is shorter than a distance from the collimator to the X-ray detector. For example, the ratio of the distance from the analyte to the collimator to the distance from the collimator to the X-ray detector is equal to or less than 0.1, and is preferably less than 0.025.

In some embodiments, the packaged sample comprises a container and the analyte partially fills the container (e.g. as shown in Figure 2). In these embodiments, the arranging step of the method may further comprise adjusting the position of the packaged sample and/or the collimator so that an analysis intersection formed by the intersection of the incident X-ray beam and the diffracted X-ray beam (e.g. portion 225 in Figure 2), is positioned in the portion of the cavity in which the analyte is held and not in the portion of the cavity that is free of the analyte. In this way, the detection of X-ray scattering from the empty portion of the container is minimised/avoided.

In some embodiments, the method comprises controlling the size of the active portion of the X-ray detector by selecting which parts of the active portion of the X-ray detector contribute to detecting X-rays. The size of the active portion can be controlled electronically to match the size of the diffracted X-ray beam selected by the collimator. This can help to further avoid/reduce the presence of background scattering in the diffractogram.

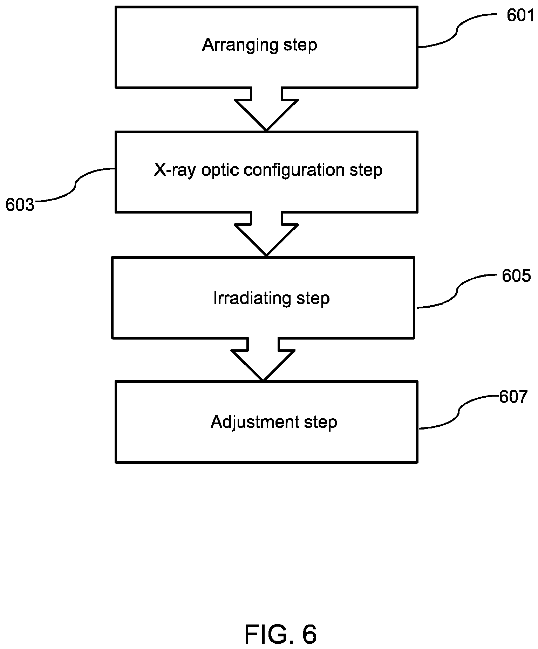

Figure 6 illustrates a method of X-ray diffraction analysis for analysing a packaged sample. The method may be carried out, for example, using the X-ray diffraction apparatus of Figure 4. In an arranging step 601, a second primary X-ray optic and a first secondary X-ray optic are arranged on the incident X-ray beam side and diffracted X-ray beam side of the packaged sample, respectively.

In an X-ray optic configuration step 603, the second primary X-ray optic and the first secondary X-ray optic are configured to define an analysis intersection. That is, the second primary X-ray optic and the first secondary X-ray optic are positioned - and optionally the relevant dimensions of the second primary X-ray optic and the first secondary X-ray optic, such as collimation slit dimensions, are selected - relative to the rest of the X-ray diffraction apparatus (e.g., the X-ray source, the first primary X-ray optic, the packaged sample and the X-ray detector) to define an analysis intersection. The analysis intersection is positioned in a region of the packaged sample within the packaging (that is, the analysis intersection does not include the packaging). The analysis intersection is formed by the intersection of the incident X-ray beam and the diffracted X-ray beam.

In some embodiments, the packaged sample defines a cavity in the "packaged" region of the packaged sample (as opposed to the packaging region of the packaged sample, in which the packaging is present). The cavity comprises an analyte region and an analyte-free region. The analysis intersection may be formed in both the analyte region and the analyte-free region. Alternatively, the analysis intersection may be formed only in the analyte region (as depicted in Figures 2, 3 and 4).

In an irradiating step 605, the packaged sample is irradiated with incident X-rays. The incident X-rays pass are directed from the X-ray source, towards the sample, via the first primary X-ray optic and the second primary X-ray optic. The incident X-rays are diffracted and/or scattered by the sample. A first portion of diffracted X-rays pass through the first secondary X-ray optic to be detected by the X-ray detector. The first portion of diffracted X-rays are X-rays from the analysis intersection defined by the second primary X-ray optic and the first secondary X-ray optic. A second portion of diffracted X-rays are prevented from being detected by the X-ray detector. The second portion of diffracted X-rays are X-rays outside of the analysis intersection defined by the second primary X-ray optic and the first secondary X-ray optic. For example, the first portion of diffracted X-rays are from a region within the packaging, and the second portion of diffracted X-rays are from a packaging region (a region in which the packaging is present).

In some embodiments, the method further comprises an adjustment step 607, in which the position of the packaged sample and/or the first secondary X-ray optic and/or the first primary X-ray optic and/or the second primary X-ray optic are adjusted so that an analysis intersection, formed by the intersection of the incident X-ray beam and the diffracted X-ray beam, is re-positioned. For example, the adjustment step 607 may comprise changing the location of the analysis intersection such that it is formed in a portion of the cavity in which the analyte is held and not in the portion of the cavity that is free of the analyte.

The skilled person will understand that the embodiments described above are illustrative of the invention, and that modifications can be made to those embodiments without departing from the scope of the claims.

Although Figures 2 and 3 show the packaged sample as comprising a packaging partially filled with an analyte, the packaging may instead be completely filled with analyte.

The packaged sample is not necessarily a glass vial holding a pharmaceutical product or a battery. The X-ray diffraction apparatus is suitable for use with analysis of any core-shell type structure, in which the core is the analyte and the shell is the packaging. Examples of packaged samples include any sample held within a container comprising packaging that can scatter and/or absorb X-rays. For example, an analyte held in a plastic, metal or glass container. The analyte may be a powder, a lyophilized powder, a tablet, a liquid or a semisolid formulation. In another example, the packaged sample may be a device in which an analyte is contained e.g. an electrochemical cell.

The sample support may not be a clamp. In some embodiments, the sample support may be a stage on which the packaged sample is supported. In some embodiments, the sample support may be motorized to rotate the sample (in order to improve scattering statistics) or to provide automatic exchange of samples.

In some embodiments, the collimator is not a one-dimensional slit. The collimator may instead comprise an aperture shaped to limit the diffracted X-ray beam in two dimensions. Alternatively, the collimator may be a parallel plate collimator, an X-ray mirror, or a combination of one-dimensional slits.

In some embodiments the primary X-ray optic is not an elliptical graded X-ray mirror. It may instead be another type of X-ray optic for providing a beam of convergent or parallel X-rays. For example, the primary X-ray optic may comprise a curved crystal monochromator for generating a convergent beam, or a parabolic graded X-ray mirror for creating a parallel beam. Alternatively, the primary X-ray optic may comprise the combination of a flat graded X-ray mirror and a narrow slit to form a narrow quasi-parallel beam.

The anode of the X-ray source need not necessarily comprise silver. The anode may comprise any material capable of generating a beam of X-rays at an energy greater than 9 keV, or greater than 17 keV. For example, the anode may comprise gallium (atomic number 31), molybdenum (atomic number 42), or any other material having an atomic number equal to or greater than 31.

In some embodiments, the X-ray diffraction apparatus does not include the secondary X-ray optic.

When the collimator has a slit-shaped aperture, the aspect ratio of the aperture may be at least 2, or preferably at least 5.

In some embodiments, the size of the active area of the X-ray detector can be adjusted based on the dimensions/configuration of the first secondary X-ray optic and the X-ray detector. The adjustment may be determined according to a formula in which the dimensions of the first secondary X-ray optic (e.g., slit dimension) and X-ray detector, and their relative positions are parameters. In some embodiments, the X-ray diffraction apparatus is not configured to adjust the size of the active area based on the dimensions of the first secondary X-ray optic and the X-ray detector. The adjustment may be determined (according to the formula) and carried out manually, by an operator.

The primary X-ray optic may comprise a filter in combination with an X-ray optic for forming a convergent X-ray beam.

In some embodiments, the secondary X-ray optic is not positioned closer to the X-ray sample than it is to the X-ray detector.

## Claims

1. A method of X-ray diffraction analysis for analysing a packaged sample, wherein the packaged sample comprises an analyte confined in a packaging, the method comprising:
arranging a first primary X-ray optic between an X-ray source and the packaged sample to focus X-rays from the X-ray source into a focused X-ray beam of convergent or parallel X-rays and to direct the focused X-ray beam towards the packaged sample;
arranging a first secondary X-ray optic between the packaged sample and an X-ray detector;
using the X-ray source to irradiate the packaged sample with the focused X-ray beam of converging or parallel X-rays, the X-rays having an energy greater than about 9 keV, at an incident angle, ω, to an incident surface of the packaged sample, while the analyte is confined in the packaging;
configuring the first secondary X-ray optic such that a first portion of diffracted X-rays pass therethrough to be detected by the X-ray detector and a second portion of diffracted X-rays are prevented from being detected by the X-ray detector, wherein the first portion of diffracted X-rays come from a region substantially within the packaging.

2. A method according to claim 1, wherein the first secondary X-ray optic is configured such that the first portion of diffracted X-rays come from a region within the analyte.

3. A method according to claim 1 or claim 2, wherein the second portion of X-rays comprises X-rays diffracted by the packaging.

4. A method according to any of claims 1 to 3 further comprising arranging a second primary X-ray optic between the first primary X-ray optic and the packaged sample, wherein the second primary X-ray optic and the first secondary X-ray optic are configured to form an analysis intersection, formed by the intersection of the incident X-ray beam and the diffracted X-ray beam, wherein the analysis intersection is positioned in a region within the packaging.

5. A method according to any of claims 1 to 4, wherein the first secondary X-ray optic is a collimator.

6. A method according to claim 5, further comprising controlling an active area of the X-ray detector based on the size of an aperture of the collimator and the position of the collimator relative to the packaged sample and the X-ray detector.

7. A method according to any of claims 1 to 6, wherein the packaging comprises a cavity in which the analyte is held, and a portion of the cavity is free of the analyte, the method further comprising adjusting the position of the packaged sample and/or the first secondary X-ray optic so that an analysis intersection, formed by the intersection of the incident X-ray beam and the diffracted X-ray beam, is positioned in a portion of the cavity in which the analyte is held and not in the portion of the cavity that is free of the analyte.

8. The method of any of claims 1 to 7, wherein the X-ray source comprises an anode, the anode comprising a material having an atomic number of equal to or greater than 31, the packaging comprises a wall having a thickness of at least approximately 1 mm.

9. An X-ray diffraction apparatus for analysing a sample, the X-ray diffraction apparatus comprising:
a packaged sample comprising an analyte confined in a packaging;
an X-ray source for irradiating the packaged sample with incident X-rays, wherein the incident X-rays are directed towards the packaged sample along an incident beam path;
a sample support for supporting the packaged sample;
a first primary X-ray optic arranged in the incident beam path, wherein the first primary X-ray optic is arranged to focus the incident X-rays into a convergent or parallel X-ray beam, and to direct the X-ray beam towards the packaged sample;
an X-ray detector arranged to receive diffracted X-rays from the packaged sample; and
a first secondary X-ray optic arranged between the sample support and the X-ray detector to allow a first portion of diffracted X-rays to reach the X-ray detector and to prevent a second portion of diffracted X-rays from being detected by the X-ray detector,
wherein the first secondary X-ray optic is configured such that the first portion of diffracted X-rays come from a region substantially within the packaging.

10. An X-ray diffraction apparatus according to claim 9, wherein the first secondary X-ray optic is configured such that the first portion of diffracted X-rays come from a region within the analyte.

11. An X-ray diffraction apparatus according to claim 9 or claim 10 further comprising a second primary X-ray optic arranged between the first primary X-ray optic and the packaged sample, wherein the second primary X-ray optic and the first secondary X-ray optic are configured to form an analysis intersection, formed by the intersection of the incident X-ray beam and the diffracted X-ray beam, wherein the analysis intersection is positioned in a region within the packaging.

12. An X-ray diffraction apparatus according to any of claims 9 to 11, wherein the first secondary X-ray optic is a collimator.

13. An X-ray diffraction apparatus according to any of claims 9 to 12, wherein the X-ray source comprises an anode, the anode comprising a material having an atomic number of equal to or greater than 31 and/or wherein the primary X-ray optic is a monochromator arranged to direct a substantially monochromatic beam of X-rays towards the packaged sample.

14. An X-ray diffraction apparatus according to any of claims 9 to 13 wherein the X-ray detector has an active portion for generating a detection signal in response to an X-ray incident on the active portion, the active portion comprising a plurality of detection elements for detecting X-rays, and the X-ray diffraction apparatus further comprises a controller configured to select which of the detection elements contribute to generating the detection signal.

15. The X-ray diffraction apparatus according to any of claims 7 to 14 wherein the X-ray source is arranged to irradiate an incident surface of the packaged sample at an incident angle, ω, and the X-ray detector is arranged to receive diffracted X-rays at a diffraction angle 2θ.
